# EUROPÄISCHE PATENTANMELDUNG

(11) **EP 0 756 924 A2**
(43) Veröffentlichungstag der Anmeldung: **05.02.1997**
(21) Anmeldenummer: 96112194.4
(22) Anmeldetag: 28.07.1996
(51) Int. Cl.: B29C 43/20

(54) **Verfahren zur Herstellung eines Flächengebildes, insbesondere Belages**

(30) Priorität: 29.07.1995 DE 19527877
(71) Anmelder: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.

(57) **Zusammenfassung**

Bei einem Verfahren zur Herstellung eines Flächengebildes, insbesondere Belages, mit einer Schicht aus mindestens zwei Kunststoffmaterialien werden dünne, flächige, zweischichtige Verbundstücke aus einem ersten thermoplastischen Kunststoffmaterial und aus einem zweiten thermoplastischen Kunststoffmaterial, wobei die Schmelzpunkte des ersten und des zweiten Kunststoffmaterials sich um mehr als 20 °C unterscheiden, abgelegt. Die abgelegten, dünnen, flächigen Verbundstücke werden bei einer Temperatur, die oberhalb des Schmelzpunktes des ersten Kunststoffmaterials, aber unterhalb der Temperatur des zweiten Kunststoffmaterials liegt unter Ausübung von Druck miteinander verbunden.

Durch die Verwendung von Verbundstücken aus den zwei unterschiedlichen Kunststoffmaterialien wird eine gleichmäßige Verteilung dieser beiden Materialien über das gesamte Flächengebilde gewährleistet.

Als thermoplastische Kunststoffmaterialien werden Polyolefine, insbesondere Polyethylen und Polypropylen verwendet.

## Beschreibung

Die Erfindung betrifft ein verfahren zur Herstellung eines Flächengebildes, insbesondere Belages gemäß dem Oberbegriff des Anspruches 1.

Aus der DE-A-4.235.530 ist ein verfahren bekannt, bei dem in Stück- oder Streifenform vorliegende Kunststoff-Abfallfolien durch Druck oder Temperatur miteinander zu einem neuen Gebilde verbunden werden. Insbesondere, wenn unterschiedliche Kunststoffmaterialien verwendet werden, kommt es immer wieder vor, daß diese unterschiedlichen Kunststoffmaterialien in dem Gebilde ungleichmäßig verteilt sind. Dadurch erhält man dann, wenn diese Materialien unterschiedliche Eigenschaften, z.B. unterschiedliche Schmelztemperaturen, haben und die angewandte Temperatur unterhalb der Schmelztemperatur des höher schmelzenden Kunststoffmaterials liegt, eine ungleichmäßige Verbindung der Kunststoffstücke oder -folien innerhalb des Gebildes.

Dadurch ist die Qualität, wie der Zusammenhalt u.a., des fertigen, z.B. flächigen Gebildes über seine Fläche sehr ungleichmäßig.

Unter einem Flächengebilde wird hier nicht nur ein völlig ebenes Gebilde verstanden, sondern z.B. auch ein flächiges Gebilde, welches Erhöhungen und Vertiefungen aufweist. Dieses kann z.B. die Form eines Eierkartons aufweisen.

Der Erfindung liegt deshalb die Aufgabe zugrunde, ein Verfahren zu schaffen, bei dem bei der Herstellung eines Flächengebildes, wie eines Belages, aus zwei unterschiedlichen Kunststoffmaterialien eine gleichmäßige Verteilung dieser beiden Materialien über das gesamte Flächengebilde gewährleistet wird.

Diese Aufgabe wird durch das Verfahren nach Anspruch 1 gelöst.

Bei dem erfindungsgemäßen Verfahren zur Herstellung eines Flächengebildes, insbesondere Belages, mit einer mindestens zwei Kunststoffmaterialien aufweisenden Schicht, wird eine Vielzahl von dünnen, flächigen, zweischichtigen Verbundstücken aus einem ersten thermoplastischen Kunststoffmaterial und aus einem zweiten thermoplastischen Kunststoffmaterial, wobei die Schmelzpunkte des ersten und des zweiten Kunststoffmaterials sich um mehr als 20 °C unterscheiden, abgelegt und die abgelegten, dünnen, flächigen Verbundstücke werden bei einer Temperatur, die oberhalb des Schmelzpunktes des ersten Kunststoffmaterials, aber unterhalb des Schmelzpunktes des zweiten Kunststoffmaterials liegt, unter Ausübung von Druck miteinander verbunden.

Dadurch, daß die beiden Kunststoffmaterialien als Verbundstoff vorliegen, liegen diese nicht nur in einem definierten Mischungsverhältnis von 1 : 1 in der Bahn vor, sie sind dort auch gleichmäßig verteilt. Dadurch kann das niedriger schmelzende Kunststoffmaterial gleichmäßig in der Bahn als Verbindungsmittel benutzt werden.

Vorzugsweise werden beim Ablegen die dünnen, flächigen, zweischichtigen Verbundstücke zu einer kontinuierlichen Bahn abgelegt. Dabei können die Verbundstücke auch zumindest teilweise übereinander liegen.

Als thermoplastischer Kunststoff können beispielsweise Polyolefine verwendet werden. Bevorzugt werden dabei als erstes thermoplastisches Kunststoffmaterial Polyethylen und als zweites Kunststoffmaterial Polypropylen verwendet. Das aus Polyethylen bestehende Kunststoffmaterial weist einen Schmelzpunkt von circa 110 °C auf, während das aus Polypropylen bestehende Kunststoffmaterial einen Schmelzpunkt von circa 168 °C aufweist.

Erhitzt man nun die Bahn der aus den beiden Kunststoffmaterialien bestehenden Verbundstücke auf etwas oberhalb von 110 °C und drückt auf die Bahn, so schmilzt das in der Bahn enthaltene Polyethylen an und wird klebrig, die einzelnen Polyethylen-Schichten der zweischichtigen Verbundstücke verbinden sich miteinander und die Bahn erhält einen gleichmäßigen Zusammenhalt. Die Polyethylen-Bestandteile bleiben dabei voll erhalten.

Zur Herstellung der zweischichtigen Verbundstücke als Zwischenprodukte des Verfahren aus den beiden unterschiedlichen Kunststoffmaterialien wird eine folienförmige Bahn des ersten Kunststoffmaterials auf eine Bahn des zweiten Kunststoffmaterials gelegt, beide Bahnen werden zu einer Verbundbahn miteinander verbunden und die Verbundbahn wird in aus zwei verschiedenen Kunststoffmaterialien bestehende Verbundstücke aufgeteilt.

Die Verbundstücke aus den beiden unterschiedlichen Kunststoffmaterialien können dabei miteinander durch Kleben, durch Schweißen, durch wäßrige Haftung oder durch Wärme miteinander verbunden werden. Eine absolut feste Verbindung zwischen den beiden Schichten der Verbundstücke ist nicht notwendig. Die Verbindung soll und muß nur solange bestehen bleiben, bis die aus den Verbundstücken gebildete Bahn durch mindestens das eine Kunststoffmaterial in sich gebunden wird.

Die Verbundbahn kann in einzelne, zweischichtige Verbundstücke z.B. zerschnitten, gestanzt oder gemahlen werden.

Bevorzugt besteht die eine Schicht der Verbundstücke aus dem ersten Kunststoffmaterial aus Folien bzw. Folienabschnitten, während die Schicht der Verbundstücke aus dem zweiten Kunststoffmaterial aus einem dünnen, in sich verfestigten Feinvlies bestehen kann. Letztere Schicht sorgt in dem fertigen Flächengebilde für die Stabilität, sowie für eine Rauheit der unteren Außenseite des Flächengebildes.

Zusätzlich kann vor dem Verbinden der Verbundstücke zu dem flächenförmigen Gebilde durch erhöhte Temperatur und durch Druck auf die gebildete Bahn eine Schicht von Fasern als Oberschicht abgelegt werden, woraufhin die beiden Schichten mittels der Oberschicht entnommener Fasern miteinander vernadelt werden. Hierdurch erhält das nach dem erfindungsgemäßen Verfahren geschaffene Flächengebilde nicht nur eine faserhaltige Oberschicht, sondern darüber hinaus eine bessere Festigkeit und ein größeres Volumen.

Darüber hinaus oder alternativ kann die Mischung aus dünnen, flächigen, zweischichtigen Verbundstücken auf eine Trägerschicht abgelegt werden und mit dieser verbunden werden. Dieses Verbinden kann durch das zuvor beschriebenen Vernadeln erfolgen, wobei die Trägerschicht mit vernadelt wird, es kann aber auch dadurch erfolgen, daß die Trägerschicht durch Hitze und Druck mit der die Verbundstücke aufweisenden Schicht verbunden wird.

Die Verbundstücke können einen Thermobinder bilden, der bei zwei voneinander unterschiedlichen Temperaturbereichen aktiviert werden kann.

Im folgenden wird noch eine Ausführungsform der Erfindung beschrieben.

Eine Polyethylenfolie mit einem Flächengewicht von 250 g/m² wird auf einen Vliesstoff aus Polypropylen mit einem Flächengewicht von 250 g/m² abgelegt und beiden Schichten werden durch Kleben und / oder Druck, z.B. zwischen zwei kalten Walzen, miteinander zu einer Bahn verbunden. Diese Bahn wird in einzelne, zweischichtige Verbundstücke zerschnitten, wobei die Verbundstücke eine Größe zwischen 50 * 50 mm² und 100 * 100 mm² aufweisen können. Die Verbundstücke können jede beliebige Form aufweisen, da nur wesentlich ist, daß jeweils zwei gleich große Flächen oder Mengen aus den beiden Kunststoffmaterialien miteinander verbunden und zerkleinert sind, um eine optimale Mischung der beiden Materialien zu erhalten.

Die Verbundstücke werden z.B. auf eine bahnförmige Trägerschicht abgelegt. Diese Trägerschicht kann aus Polypropylen bestehen und z.B. ein Polypropylen-Bändchengewebe sein.

Auf die Schicht aus den Verbundstücken wird eine Schicht aus nadelfähigen Fasern, z.B. aus Polypropylen, als Oberschicht abgelegt, woraufhin alle drei Schichten durch der Oberschicht entnommener Fasern miteinander vernadelt werden. Schon beim Vernadeln werden die drei Schichten einem Druck unterworfen.

Daraufhin wird die vernadelte, dreischichtige Bahn z.B. zwischen zwei heißen Kalanderwalzen hindurch geführt, wobei die Wärme der Kalanderwalzen so eingestellt wird, daß die Polyethylenschicht der Verbundstücke schmilzt und die Schmelze nicht nur die vernadelten, die Mittelschicht durchdringenden Fasern, sondern auch die Polypropylenschicht der Verbundstücke und die Trägerschicht bindet.

Ein solches Flächengebilde mit einer textilen Oberschicht kann z.B. als Teppich benutzt werden.

## Patentansprüche

1. Verfahren zur Herstellung eines Flächengebildes, insbesondere Belages, mit einer mindestens zwei Kunststoffmaterialien aufweisenden Schicht, dadurch gekennzeichnet, daß eine Vielzahl dünner, flächiger, zweischichtiger kleiner Verbundstücke aus einem ersten thermoplastischen Kunststoffmaterial und aus einem zweiten thermoplastischen Kunststoffmaterial, wobei die Schmelzpunkte des ersten und des zweiten Kunststoffmaterials sich um mehr als 20 °C unterscheiden, zu mindestens einer Schicht abgelegt werden und die abgelegten, dünnen, flächigen Verbundstücke bei einer Temperatur, die oberhalb des Schmelzpunktes des ersten Kunststoffmaterials, aber unterhalb des Schmelzpunktes des zweiten Kunststoffmaterials liegt unter Ausübung von Druck miteinander verbunden werden.

2. Verfahren nach Anspruch 1, dadurch gekennzeichnet, daß beim Ablegen die dünnen, flächigen, zweischichtigen Verbundstücke zu einer kontinuierlichen Bahn abgelegt werden.

3. Verfahren nach Anspruch 1 oder 2, dadurch gekennzeichnet, daß als thermoplastischer Kunststoff Polyolefine verwendet werden.

4. Verfahren nach einem der vorhergehenden Ansprüche, dadurch gekennzeichnet, daß als erstes thermoplastisches Kunststoffmaterial Polyethylen und als zweites Kunststoffmaterial Polypropylen verwendet werden.

5. Verfahren nach einem der vorhergehenden Ansprüche, dadurch gekennzeichnet, daß zur Herstellung der zweischichtigen Verbundstücke aus den beiden unterschiedlichen Kunststoffmaterialien eine folienförmige Bahn des ersten Kunststoffmaterials auf eine Bahn des zweiten Kunststoffmaterials gelegt wird, beide Bahnen zu einer Verbundbahn miteinander verbunden werden und die Verbundbahn in aus zwei verschiedenen Kunststoffmaterialien bestehende Verbundstücke aufgeteilt werden.

6. Verfahren nach Anspruch 5, dadurch gekennzeichnet, daß die Verbundbahn aus den beiden unterschiedlichen Kunststoffmaterialien vor dem Aufteilen in die Verbundstücke miteinander durch Kleben, durch Schweißen, durch wäßrige Haftung oder durch Wärme mindestens teilweise miteinander verbunden werden.

7. Verfahren nach Anspruch 5 oder 6, dadurch gekennzeichnet, daß die Verbundbahn in einzelne, zweischichtige Verbundstücke zerschnitten wird.

8. Verfahren nach Anspruch 5 oder 6, dadurch gekennzeichnet, daß die Verbundbahn in einzelne, zweischichtige Verbundstücke gestanzt wird.

9. Verfahren nach Anspruch 5 oder 6, dadurch gekennzeichnet, daß die Verbundbahn in einzelne, zweischichtige Verbundstücke gemahlen wird.

10. Verfahren nach einem der Ansprüche 5 bis 9, dadurch gekennzeichnet, daß für die eine Schicht der Verbundstücke aus dem ersten Kunststoffmaterial Folien bzw. Folienabschnitten verwendet werden.

11. Verfahren nach einem der Ansprüche 5 bis 10, dadurch gekennzeichnet, daß für die eine Schicht der Verbundstücke aus dem zweiten Kunststoffmaterial ein dünnes, in sich verfestigtes Feinvlies verwendet wird.

12. Verfahren nach einem der vorhergehenden Ansprüche, dadurch gekennzeichnet, daß vor dem Verbinden der Verbundstücke durch erhöhte Temperatur und durch Druck auf die gebildete Bahn eine Schicht von Fasern als Oberschicht abgelegt wird und die beiden Schichten mittels der Oberschicht entnommener Fasern miteinander vernadelt werden.

13. Verfahren nach einem der vorhergehenden Ansprüche, dadurch gekennzeichnet, daß die Mischung aus dünnen, flächigen, zweischichtigen Verbundstücken auf eine Trägerschicht abgelegt und mit dieser verbunden wird.
